(19) Europäisches Patentamt / European Patent Office / Office européen des brevets

(11) **EP 3 937 442 B1**

(12) **EUROPEAN PATENT SPECIFICATION**

(45) Date of publication and mention
of the grant of the patent:
**21.12.2022 Bulletin 2022/51**

(21) Application number: **20185334.8**

(22) Date of filing: **10.07.2020**

(51) International Patent Classification (IPC):
**H04L 27/26** *(2006.01)*    **H04W 56/00** *(2009.01)*
**H04W 74/08** *(2009.01)*

(52) Cooperative Patent Classification (CPC):
**H04L 27/265; H04W 56/0045**

(54) **METHOD AND DEVICE FOR AN UPLINK TRANSMISSION DELAY ESTIMATION**

VERFAHREN UND VORRICHTUNG ZUR SCHÄTZUNG DER VERZÖGERUNG EINER UPLINK-ÜBERTRAGUNG

PROCÉDÉ ET DISPOSITIF POUR L'ESTIMATION DU RETARD DE TRANSMISSION EN LIAISON MONTANTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**12.01.2022 Bulletin 2022/02**

(73) Proprietors:
• **Mitsubishi Electric R & D Centre Europe B.V.**
**1119 NS Schiphol Rijk (NL)**
Designated Contracting States:
**FR**
• **Mitsubishi Electric Corporation**
**Tokyo 100-8310 (JP)**
Designated Contracting States:
**AL AT BE BG CH CY CZ DE DK EE ES FI GB GR HR HU IE IS IT LI LT LU LV MC MK MT NL NO PL PT RO RS SE SI SK SM TR**

(72) Inventor: **CASTELAIN, Damien**
**35708 RENNES Cedex 7 (FR)**

(74) Representative: **Cabinet Le Guen Maillet**
**3, impasse de la Vigie**
**CS 71840**
**35418 Saint-Malo Cedex (FR)**

(56) References cited:
**WO-A1-2015/144256**

**Description**

TECHNICAL FIELD

At least one of the present embodiments generally relates to a method and a device for an uplink transmission delay estimation between a user equipment and a base station in a wireless communication network.

RELATED ART

In the last years, the demand for broadband high-speed, reliable and low latency services and applications, e.g. Internet Of Things devices, increased. Thus, new standards and technologies, known as 5G, have emerged to enable all these new services and applications.

For years, terrestrial and satellite networks have evolved almost independently from each other. The next generation of satellites will integrate with terrestrial 5G networks to manage connectivity to cars, vessels, airplanes and other IoT devices in remote and rural areas. 5G will encompass an evolution of today's 4G networks and the addition of a new, globally standardized radio-access technology known as "New Radio" (NR). Satellite communications will thus complement terrestrial 5G networks. To this aim, Low Earth Orbit Satellites (LEO) will play a key part in extending terrestrial 5G networks to remote areas not covered by small cell networks. In low earth orbits (LEO) satellites based mobile communication environments, the high-speed relative motion between the satellite and user equipment (UE) generates a large Doppler frequency shift. The large Doppler frequency shift is partly corrected at the UE side. However, it complicates the handling of the timing uncertainty at the base station side.

5G wireless communication system are based on orthogonal frequency-division multiplexing (OFDM). In an OFDM based system, orthogonal messages have to be sent, thus the major challenge in such a system is to maintain uplink orthogonality among users. Hence both frequency and time synchronization of the transmitted signals from the users are needed. A fine timing estimation has to be performed by the base station when the signals coming from users are detected. To this aim, it is known to use a Physical Random Access Channel (PRACH) method to obtain an initial fine time synchronization, which will allow to inform the user equipment (UE) how to compensate for the round trip delay. This compensation in the user equipment is also known as timing advance. After a successful random access procedure, in fact, the base station and the user equipment should be synchronized. In this way, the subsequent uplink signals could be correctly decoded and would not interfere with other users connected to the network.

PRACH method consists in the transmission of a set of random access preambles in order to allocate different resources to different users. A random access preamble comprises at least one cyclic prefix (CP) and Ns preamble sequences, Ns being an integer equal to or greater than 1.

Due to good zero autocorrelation and cross-correlation performance, Zadoff-Chu (ZC) sequence is generally used as the preamble sequence for timing synchronization in many systems. As an example, ZC sequences are used in current terrestrial 4G and 5G PRACH method.

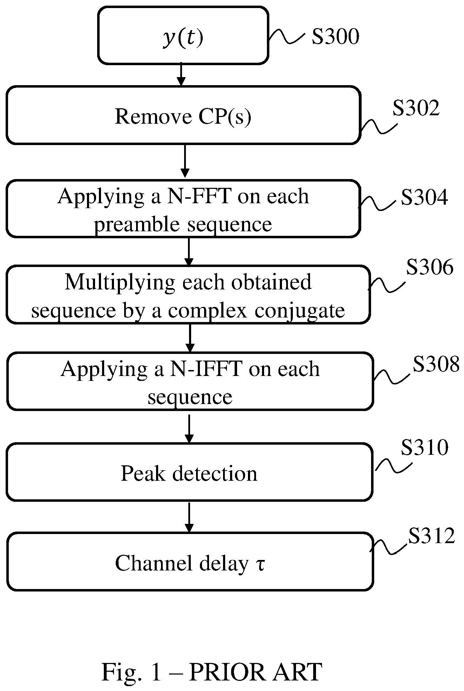

**Fig. 1** depicts a flowchart of a method used for time delay estimation according to the prior art.

At S300, a base station receives at least one random access preamble from a UE : y(t)= $x(t)$*h(t)+w(t), where $x(t)$ is the transmitted random access preamble, h(t) is a transmission filter which includes equipment filters, neglected here, and a transmission delay $\tau$ and w(t) is an additive noise, mainly consisting of the thermal noise, and possibly of some interferences. The base station removes the CP(s) from the received random access preamble at S302 to obtain the Ns preamble sequences. It must be noted that this operation is approximate. Indeed, at this step the receiver of the base station has an imprecise knowledge of the time of arrival of the signal.

At S304, a N-FFT (Fast Fourier Transform) is applied on each of the Ns obtained preamble sequences to obtain Ns sequences in the frequency domain, N being the size of the FFT.

At S306, each obtained sequence in the frequency domain is multiplied by a complex conjugate of a corresponding transmitted preamble sequence. The multiplication by the complex conjugate of the transmitted preamble sequence corresponds to a convolution in the time domain. In practice, M subcarriers (M < N) are modulated for the constitution of the PRACH preamble. The other subcarriers are set to zero.

At S308, for each sequence, a N-IFFT is applied to come back in the time domain. In practice, the IFFT could be performed with a size of M, or any size between M and N, without a great impact on performance. Therefore, the result is an estimation of the transmission filter h(t) in the time domain. In a satellite context, in the absence of noise and impairments caused by the Doppler (frequency shift), this filter is roughly equivalent to a simple delay: h(t)=$\delta$(t-$\tau$), where $\delta$ is the Dirac pulse and $\tau$ is the transmission delay. In practice, h(t)=g(t-$\tau$) where g(t) corresponds to all emission and reception filters, including the ones implied by the IFFT/FFT processes. Finally, the delay can be estimated at step S310 by calculating the amplitude of each element of the estimated time response, and looking for the maximum value. The estimation in the time domain provides good results. However, the complexity is high because a N-IFFT is applied for each preamble sequence. The time latency of this method is also high which is an issue for time critical applications. In document WO 2015/144256 A1 (ERICSSON TELEFON AB L M [SE]) 1 October 2015 the time delay is estimated by coherently adding the correlation results for each frequency domain sequences.

It is thus desirable to find a method for estimating a time delay that is precise and whose complexity and latency are limited.

SUMMARY OF THE INVENTION

A method for an uplink transmission delay estimation between a user equipment and a base station in a wireless communication network is disclosed. The method being implemented in the base station comprises :

- receiving at least one random access preamble transmitted by the user equipment, said random access preamble comprising at least one cyclic prefix and Ns preamble sequences occupying M subcarriers, M being an integer, Ns being an integer equal or greater than one;
- removing the at least one cyclic prefix to obtain the Ns preamble sequences;
- applying a Fast Fourier transform of size N on each of the Ns obtained preamble sequences to obtain Ns sequences in the frequency domain, N being an integer;
- multiplying each obtained sequence in the frequency domain with a complex conjugate of a corresponding transmitted preamble sequence to obtain , for each obtained sequence in the frequency domain identified by an index p, M values $Z_k^p$ where k is an index identifying the subcarrier;

the method being characterized in that it further comprises:

- computing the following sum for each value of s, where s is an integer lower than or equal to $s_{max}$ and corresponds to a subcarrier separation :

$$S[s] = \frac{1}{N_s(M-s)} \sum_{p=1}^{Ns} \sum_{k=1}^{M-s} Z_{k+s}^p \left(Z_k^p\right)^*$$

- calculating (S414) C candidate values $\Gamma[c]$, wherein C is an integer and $\Gamma[c]$ is a weighted linear combination of $\Gamma[c,s]$ with weighting factors increasing with s and $\Gamma[c,s]=\sqrt[s]{S[s]}\, e^{\frac{-j2\pi l[c,s]}{s}}$ or $\Gamma[c,s]=\sqrt[s]{S_{norm}[s]}\, e^{\frac{-j2\pi l[c,s]}{s}}$ where 1[c,s] is a phase correcting factor and $S_{norm}[s]$ is a normalized version of S[s];
- selecting a candidate $C_{opt}$ among the C candidate values $\Gamma[c]$ with a smallest associated error calculated with respect to the sums S[s];
- determining a phase responsive to the selected candidate; and
- determining a delay responsive to the determined phase.

This method whose complexity and latency is limited makes it possible to precisely estimate the time delay. The method is also performant in case of noise and distortions, e.g. in case of high Doppler.

In an embodiment, determining the delay responsive to the determined phase comprises calculating the delay $\hat{\tau}$ as follows:

$$\hat{\tau} = \frac{N\varphi_{opt}}{2\pi}$$

where $\varphi_{opt}$ is the determined phase.

In an embodiment, determining the phase responsive to the selected candidate comprises calculating the phase $\varphi_{opt}$ as follows:

$$\varphi_{opt} = -\arg \Gamma[c_{opt}]$$

where $C_{opt}$ is the selected candidate, arg(x) an operator returning the argument of x.

In an embodiment, selecting the candidate $C_{opt}$ among the C candidates with a smallest associated error

$$C_{opt} = \underset{c}{\arg\min} \sum_s |S_{norm}[s] - \Gamma^s[c]|^2$$

calculated with respect to the sums S[s] is determined as follows: where $S_{norm}[s]$ is a normalized version of S[s].

In an embodiment, the wireless communication network is a 5G network.

In an embodiment, each obtained sequence in the frequency domain is a Zadoff-Chu sequence or a M-sequence.

In an embodiment, Ns is equal to 1 or 2. In an embodiment, M is equal to 839.

A time synchronization method between a user equipment and a base station is also disclosed. The time synchronization method comprises:

- estimating, by the base station, a transmission delay using the method for an uplink transmission delay estimation according to one of the previous embodiments;
- transmitting, by the base station, the estimated transmission delay to the user equipment;
- applying, by the user equipment, a time delay responsive to the received estimated transmission delay on all the uplink communications transmitted to the base station.

A device of the base station type in communication with a user equipment in a wireless communication network is further disclosed. The device is configured to estimate an uplink transmission delay estimation from the user equipment, the device comprising:

- means for receiving at least one random access preamble transmitted by the user equipment, said random access preamble comprising at least one cyclic prefix and Ns preamble sequences occupying M subcarriers, M being an integer, Ns being an integer equal or greater than one;
- means for removing the at least one cyclic prefix to obtain the Ns preamble sequences;
- means for applying a Fast Fourier transform of size N on each of the Ns obtained preamble sequences to obtain Ns sequences in the frequency domain, N being an integer;
- means for multiplying each obtained sequence in the frequency domain with a complex conjugate of a corresponding transmitted preamble sequence to obtain , for each obtained sequence in the frequency domain identified by an index p, M values $Z_k^p$ where k is an index identifying the subcarrier;

the method being characterized in that it further comprises:

- means for computing the following sum for each value of s, where s is an integer lower than or equal to $s_{max}$ and corresponds to a subcarrier separation :

$$S[s] = \frac{1}{N_s(M-s)} \sum_{p=1}^{Ns} \sum_{k=1}^{M-s} Z_{k+s}^p \left( Z_k^p \right)^*$$

- means for calculating C candidate values Γ[c], wherein C is an integer and Γ[c] is a weighted linear combination of Γ[c,s] with weighting factors increasing with s and $\Gamma[c,s] = \sqrt[s]{S[s]} \, e^{\frac{-j2\pi l[c,s]}{s}}$ or $\Gamma[c,s] = \sqrt[s]{S_{norm}[s]} \, e^{\frac{-j2\pi l[c,s]}{s}}$. where 1[c,s] is a phase correcting factor and $S_{norm}[s]$ is a normalized version of S[s];
- means for selecting a candidate $C_{opt}$ among the C candidate values Γ[c] with a smallest associated error calculated with respect to the sums S[s];
- means for determining a phase responsive to the selected candidate; and
- means for determining a delay responsive to the determined phase.

A computer program product is disclosed. It comprises program code instructions that can be loaded in a programmable device, the program code instructions causing implementation of the method according to one the previous embodiments when the program code instructions are run by the programmable device.

A storage medium, possibly non-transitory, is disclosed. It stores a computer program comprising program code instructions, the program code instructions causing implementation of the method according to one the previous embodiments when the program code instructions are read from the storage medium and run by the programmable device.

BRIEF DESCRIPTION OF THE DRAWINGS

The characteristics of the invention will emerge more clearly from a reading of the following description of at least one example of embodiment, said description being produced with reference to the accompanying drawings, among which:

Fig. 1 depicts a flowchart of a method for delay estimation according to the prior art;
Fig. 2 depicts a system in which various embodiments may be implemented;
Fig. 3 illustrates the principles of random access method in which various embodiments may be implemented;
Fig. 4 depicts a flowchart of a method for delay estimation according to a specific embodiment;
Fig. 5 depicts a flowchart of a method for determining phase correcting factors according to a specific embodiment; and
Fig. 6 illustrates schematically an example of hardware architecture of a device according to a specific embodiment.

DETAILED DESCRIPTION OF AT LEAST ONE EMBODIMENT

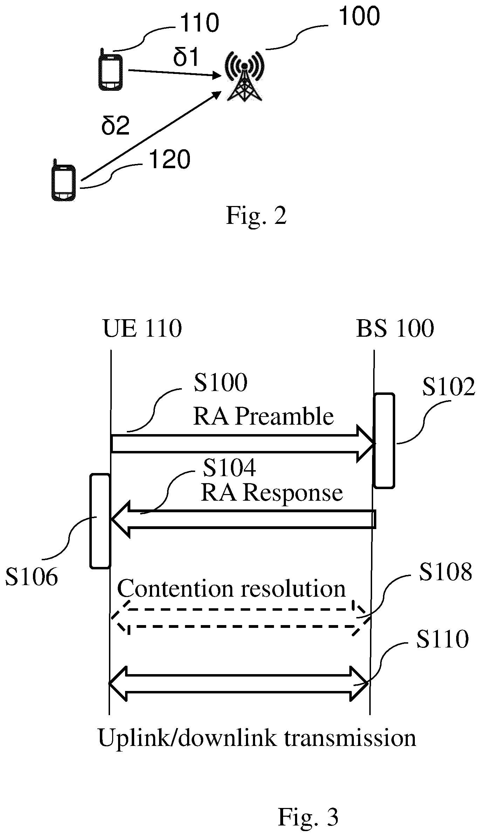

**Fig. 2** depicts a system in which various embodiments may be implemented. Two user equipments 110 and 120, such as for example cell phones or tablets, are connected to a base station 100. The base station 100 is for example a 5G base station which uses New Radio (NR) technology and is also referred to as a gNodeB (gNb). The base station may also be a 3G or a 4G base station.

The transmission time between the first user equipment 110 and the base station 100 is equal to $\delta1$ and the transmission time between the second user equipment 120 and the base station 100 is equal to $\delta2$. These values need to be estimated in order to synchronize the base station with these equipments and thus avoid interference with other UEs connected to the network. Indeed, the UEs have different transmission delays to the base station, and, therefore, a method to compensate for these differences is required so as to prevent that data transmitted from these different UEs to collide at the base station 100.

To this aim, a random access method may be used such as the one disclosed with respect to Fig. 3. The principles disclosed herein in the context of a base station may apply to any receiver that needs to estimate a delay.

**Fig. 3** illustrates the principles of random access method in which various embodiments may be implemented. Random access is generally performed when the UE powers-on or turns-on from sleep mode or during the handoff from one cell to another or when it loses uplink timing synchronization.

At S100, the user equipment 110 transmits in an uplink a Random Access (RA) preamble to the base station 100. The RA preamble is randomly selected. The RA preamble comprises at least one cyclic prefix (CP) and at least one preamble sequence, e.g. a ZC sequence. However, the present principles are not limited to this specific RA preamble. In particular, sequences other than ZC sequences may be used such as M-sequences.

At S102, the base station estimates a delay, e.g. a round trip transmission delay. In another embodiment, the base station estimates a time difference between an average transmission delay known by the base station and the current transmission delay. From the average transmission delay and the time difference the base station can estimate the exact transmission delay. In an embodiment, the base station knows its distance from the center of the cell to which the user equipment belongs. From this distance, the base station can estimate the average transmission delay.

In another embodiment, the base station estimates a time difference between a previously estimated transmission delay and the current transmission delay. From the previously estimated transmission delay and the time difference the base station can estimate the current transmission delay. Indeed, after the UE has become synchronized, the synchronization may be lost. This can, for example, be the case if the transmission delay changes because for example the UE moves further from or closer to the base station. Therefore, a time difference may be estimated between the previous transmission delay corresponding to the former position of the UE with respect to the base station and the current one corresponding for example to the new position of the UE. The base station may also move which is the case with a LEO satellite. Knowing its displacement, the base station can estimate at least partially the effect of its displacement on the delay and thus determine a time correction to be applied. However, this time correction depends on the user equipment position and is thus not perfect.

At S104, the base station 100 transmits in a downlink a RA response to the user equipment 110. The RA response comprises the value of the transmission delay estimated by the base station. In one embodiment, the RA response indicates the successfully received preamble(s) along with the timing advance (TA) value and uplink resource allocation information to the UE. The timing advance (TA) value corresponds to the estimated transmission delay.

At S106, the UE uses the TA value to adjust its uplink timing. More precisely, the UE utilizes the received TA value to determine a suitable transmit timing.

At S108, an optional contention resolution step may apply. Indeed, the randomly selected RA preamble does not enable unique identification of the UE. Therefore, multiple UEs may try a random access with the same RA preamble sequence on the same RA channel. The contention resolution step S108 helps uniquely identify the UE that has been selected.

At S110, the user equipment 110 and the base station 100 may exchange data.

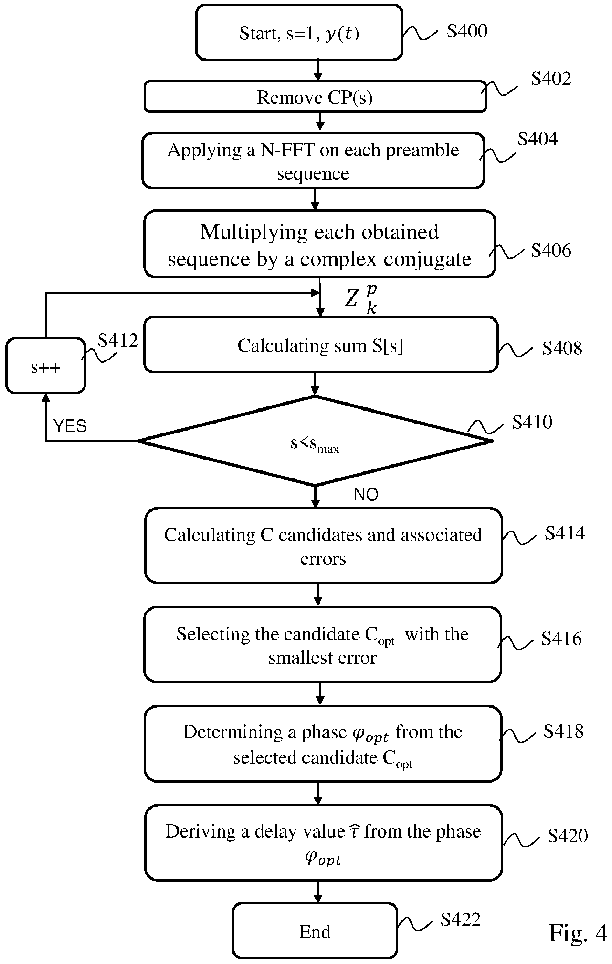

**Fig. 4** depicts a flowchart of a method for delay estimation according to a specific embodiment.

The method starts at S400. An integer s is set to the value 1. The base station 100 receives at least one random access preamble from a UE 110 : $y(t)= x(t)*g(t-\tau)+w(t)$. The random access preamble comprises at least one cyclic prefix CP and Ns preamble sequences occupying M subcarriers, M being an integer and Ns being an integer equal or greater than one. In one embodiment, the received random access sequence comprises a single cyclic prefix CP followed by Ns preamble sequences. In a variant, the received random access sequence comprises Ns cyclic prefixes CPs, each CP being followed by a single preamble sequence.

The received random access sequence may comprise additional data.

At S402, the base station 100 removes the at least one CP . In one embodiment, the base station 100 removes the single cyclic prefix CP. In a variant, the base station removes the Ns cyclic prefixes. Thus, Ns preamble sequences, constituted by N samples in the time domain, occupying M subcarriers are obtained. Each one of the Ns preamble sequences is an OFDM block. Indeed, each one of the Ns preamble sequences in the time domain corresponds to a counterpart preamble sequence in the frequency domain. Said otherwise, the Ns time domain preamble sequences received by the base station were obtained, on the transmitter side, from counterpart preamble sequences in the frequency domain by applying a N-FFT (OFDM modulation). The difference N-M corresponds to N-M non-modulated subcarriers, i.e. to zero values at the input of the N-FFT.

At S404, a N-FFT, i.e. a Fast Fourier Transform of size N, is applied on each of the Ns obtained preamble sequences to obtain Ns sequences in the frequency domain, e.g. ZC sequences or M-sequences. Each sequence in the frequency domain is identified by an index p varying from 1 to Ns. N is equal or proportional to a nominal value N' defined by the standard corresponding to the sent sequence (4G, 5G ...).At S406, in the frequency domain, each obtained sequence in the frequency domain, identified by an index p, is multiplied by a complex conjugate of a corresponding transmitted preamble sequence. Thus, for each obtained sequence in the frequency domain of index p, M values $Z_k^p$ are obtained where k is an index identifying the subcarriers, k thus varying from 1 to M.

In the frequency domain, with a delay $\tau$, after multiplication by the conjugate and omitting the noise and interference due to Doppler, $Z_k^p$ is obtained for the subcarrier $k$: $Z_k^p = e^{-j2\pi k\tau/N}$. The phase of the obtained sequence $Z_k^p$ in the frequency domain is thus representative of the transmission delay which is to be estimated.

At S408, a sum S[s] is calculated as follows from the values $Z_k^p$ and its conjugate $\left(Z_k^p\right)^*$ :

$$S[s] = \frac{1}{N_s(M-s)}\sum_{p=1}^{Ns}\sum_{k=1}^{M-s} Z_{k+s}^p\left(Z_k^p\right)^* = e^{-2\pi s\tau/N} + \eta_s = \rho_s\, e^{-j\widehat{\varphi_s}} \qquad (Eq.\ 1)$$

where M is the number of subcarriers occupied by the sequence (839 in 4G and 5G), the index s refers to a specific carrier separation, known as "the step" between the subcarriers involved in the sum calculation and the variable $\eta_s$ corresponds to the noise plus interference for example caused by Doppler. $\rho_s$ is equal to the amplitude of S[s].

Said otherwise, $S_{norm}[s] = e^{-j\widehat{\varphi_s}}$ where $S_{norm}$[s] is a normalized version of $S$[s]. Each sum S[s] after normalization is thus an estimate of $e^{-j\widehat{\varphi_s}}$ .

Thus, each sum corresponds to an average of a differential demodulation in the frequency domain.

At S410, the value of s is compared with $s_{max}$. If s< $s_{max}$, the method continues at S412 and s is increased by 1. Otherwise, the method continues at S414. Thus at S414, K sums S[s] are obtained with s $\in$ [1; $s_{max}$]. From each sum S[s], a phase $\hat{\varphi}_s$ may be estimated, wherein the phase $\hat{\varphi}_s$ is a multiple of the delay $\tau$. However, each phase $\hat{\varphi}_s$ presents a phase ambiguity of $\frac{2\pi}{s}$ , which limits the delay range if only an estimation from S[s] is performed with s > 1. Indeed,

if $\psi = \dfrac{2\pi\tau}{N}$ represents the real phase to be estimated, the estimation $\hat{\varphi}_s$ corresponds to

$$\hat{\varphi}_s = s\,\psi + noise \qquad\qquad (\text{Eq. 2})$$

In the general case, for a given step *s,* an estimation $\hat{\varphi}_s$ corresponds to a set of s values:

$$\left\{\hat{\varphi}_s, \hat{\varphi}_s + \frac{2\pi}{s}, ..., \hat{\varphi}_s + \frac{2\pi(s-1)}{s}\right\} = \left\{\hat{\varphi}_s + l\,\frac{2\pi}{s}, l = 0 \ to \ (s-1)\right\}$$

Thus, from one estimation $\hat{\varphi}_s$ obtained from a single sum S[s], it is not possible to know the real phase $\psi$ in the case where s is different of 1. There is thus an ambiguity.

To resolve these ambiguities, the different estimations of the phase are combined in step S414 in order to get a unique estimate of the phase and thus of the delay.

At S414, for a given set of steps s, *C* candidate sets are calculated from the sums S[s]. A given candidate set is composed of *L* (which is equal to the number of steps) estimations of $\psi$, each such estimations corresponding to a

$$: \hat{\psi}[c,s] = \varphi_s + l[c,s]\frac{2\pi}{s}. \ l = l[c,s]$$

particular value of *l = l[c, s]* is a phase correcting factor that depends on the step s *s* and on the candidate c. *l[c, s]* is an integer. This phase correcting factor is used to cope with the inherent phase

ambiguity $\dfrac{2\pi}{s}$ . s

For example, if s $\in$ {1,2,3,4}, i.e. $s_{max}$=4, *C* = 6 candidate sets are calculated as indicated in the table 1.

Table 1: candidate sets for steps s= {1, 2, 3, 4}

| Index c | *l[c, s]* |
|---------|-----------|
| 1 | (0, 0, 0, 0) |
| 2 | (0, 0, 0, 1) |
| 3 | (0, 0, 1, 1) |
| **4** | **(0, 1, 1, 2)** |
| 5 | (0, 1, 2, 2) |
| 6 | (0, 1, 2, 3) |

For example, if *c=4,* the *L=4* estimations of $\hat{\psi}$ [4,*s*] correspond to $\left\{\varphi_1, \varphi_2 + \pi, \varphi_3 + \dfrac{2\pi}{3}, \varphi_4 + \pi\right\}$ .

For each candidate set, the *L* estimations are combined into one. It could be possible to directly combine these phases $\hat{\psi}[c, s]$. However, it would have the disadvantage that the corresponding noise will no longer be Gaussian. In particular, this would make more problematic to select the best combination with a least square criterion.

Therefore, the base station 100 combines the $\Gamma[c,s] = e^{-j\hat{\psi}[c,s]} = e^{-j\varphi_s}e^{-jl[c,s]\frac{2\pi}{s}} =$

$\sqrt[s]{S[s]}\ e^{-j\frac{2\pi l[c,s]}{s}}$ instead of the $\hat{\psi}[c,s] = \varphi_s + l[c,s]\dfrac{2\pi}{s}$ .

In the above calculation, the normalized version of S[s] may be used. In this latter case, $\Gamma[c,s] = \sqrt[s]{S_{norm}[s]}\ e^{\frac{-j2\pi l[c,s]}{s}}$ . The normalized version $S_{norm}[s]$ of S[s] is obtained by dividing *S[s]* by its amplitude in order to obtain a complex number of amplitude 1. Instead of directly adding the different $\Gamma[c, s]$ in order to get a simple estimate $\Gamma[c]$ for each candidate set c, a sum weighted by *W[s]* is used. Thus, $\Gamma[c]$ for each candidate set c is calculated as follows:

$$\Gamma[c] = \frac{1}{\sum_s W[s]} \sum_s W[s]\, \Gamma[c,s] = \frac{1}{\sum_s W[s]} \sum_s W[s] \sqrt[s]{S[s]}\; e^{-j2\pi \frac{l[c,s]}{s}}$$

Therefore, for each candidate (c = 1 to 6 in the previous example), $\Gamma[c]$ corresponds to a linear combination of the $S[s]^{1/s} = \sqrt[s]{S[s]}$.

*W[s]* is a weighting factor that depends on *s* and increases with s. The weights *W[s]* may take the following values according to various embodiments: $W[s] = s^2$, $W[s] = s^2$, $W[s] = 1$.

At the end of S414, C estimated values $\Gamma[c]$ are obtained. The base station 100 has to select the most reliable estimation among the C estimations $\Gamma[c]$. To this aim, a least square criterion may be used, taking benefit that the noise/interference is still Gaussian or almost Gaussian.

According to equations (1) and (2), S[s] is an estimate of $e^{-js\psi}$. Besides, each $\Gamma[c]$ is an estimate of $e^{-j\psi}$. Therefore, for each candidate c, the base station calculates the following square error:

$Error[c] = \Sigma_s |S_{norm}[s] - \Gamma^s[c]|^2$ where $\Gamma^s[c]$ means $\Gamma[c]$ raised to the power of s At S416, the base station 100 selects a best candidate $C_{opt}$ as the one minimizing Error[c]. Minimizing the square error is equivalent to maximizing the reliability of the estimation under the Gaussian assumption.

At S418, a phase $\varphi_{opt}$ is determined from the selected best candidate $C_{opt}$ as follows: $\varphi_{opt} = -arg\hat{\Gamma}[c_{opt}]$.

At S420, the base station 100 estimates the corresponding delay $\tau$ from the determined phase $\varphi_{opt}$ as follows:

$$\hat{\tau} = \frac{N\varphi_{opt}}{2\pi}$$

The method ends at S422.

Each combination $\Gamma[c]$ corresponds to a different way to resolve the different phase ambiguities. The reliability, i.e. Error[c], of each combination $\Gamma[c]$ is evaluated with respect to the observations, i.e. the original sums S[s]. The combination with the best reliability, i.e. the lowest Error[c], is selected in order to provide the final delay estimation. By combining the different estimations, the phase ambiguity is thus resolved and thus a unique estimate of the phase and therefore of the delay is obtained. The method may be used in a 5G satellite system and works with very large Doppler. Thus, the method makes it possible to estimate the delay despite the difficulty caused by Doppler and by the low SNR inherent to satellite transmission.

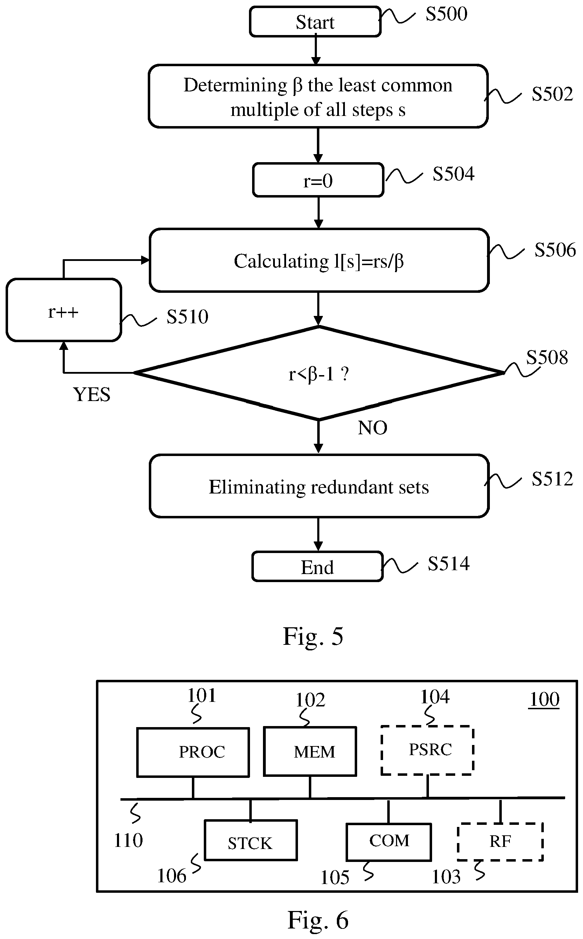

**Fig. 5** depicts a flowchart of a method for determining the phase correcting factors l[s;c] according to a specific embodiment.

The method starts at step S500. An integer r is set to the value 0.

At S502, the Least Common Multiple (LCM) $\beta$ of all the steps s is determined. In the case where the steps are equal to the followings values {1, 2, 3, 4}, β=12. The phase range [0; 2π] is divided into $\beta$ intervals of size $\frac{2\pi}{\beta}$.

At S506, a phase correcting factor corresponding to a step s in calculated as follows: $l[s] = \frac{r\,s}{\beta}$ for the interval $[r\frac{2\pi}{\beta}; (r+1)\frac{2\pi}{\beta}]$. For the calculation of l[s] the division by $\beta$ is an integer division.

At S508, r is compared with β-1. If r< β-1, the method continues at S510 and r is increased by one. Otherwise the method continues at S512.

At step S512, the redundant sets are eliminated. At the end each set *l[c, s]* is unique.

In the above example (for steps s∈{1, 2, 3, 4} and β=12), the sets of correcting factors are defined as follows before elimination of redundant sets:

**Table 2**

| r | $l[s] = \dfrac{r\,s}{\beta}$ |
|---|---|
| 0 | (0, 0, 0, 0) |
| 1 | *(0, 0, 0, 0)* |
| 2 | *(0, 0, 0, 0)* |
| 3 | (0, 0, 0, 1) |
| 4 | (0, 0, 1, 1) |
| 5 | *(0, 0, 1, 1)* |
| 6 | (0, 1, 1, 2) |
| 7 | *(0, 1, 1, 2)* |
| 8 | (0, 1, 2, 2) |
| 9 | (0, 1, 2, 3) |
| 10 | *(0, 1, 2, 3)* |
| 11 | *(0, 1, 2, 3)* |

There are 6 redundant sets underlined in the above table 2. After elimination of the redundant sets, 6 candidate sets remains as defined in the table 1.

In one embodiment, this method is performed off-line. The phase correcting factors l[s;c] determined off-line may thus be stored in memory for further use by a receiver. Assuming the step s varies from 1 to $s_{max}$, the number of candidate sets is provided in Table 2.

**Table 3: Number C of candidates sets**

| $S_{max}$ | C |
|---|---|
| 1 | 1 |
| 2 | 2 |
| 3 | 4 |
| 4 | 6 |
| 5 | 10 |
| 6 | 12 |
| 7 | 18 |
| 8 | 22 |

In a specific embodiment, the receiver of the base station chooses the $s_{max}$ value, and thus retrieves the stored phase correcting factors l[s;c] from memory. In a variant, the receiver may compute the phase correcting factors l[s;c] using the above method.

Fig. 6 depicts a flowchart of a device such as a base station 100 configured to estimate a time delay according to a specific embodiment.

The device 100 comprises, connected by a communication bus 110: a processor or CPU (acronym of "Central Processing Unit") 101; a random access memory RAM 102; a read only memory ROM 103; a storage unit or a storage medium reader such as an SD (acronym of "Secure Digital") card reader 104 or a HDD (acronym of "Hard Disk Drive"); and at least one set of communication interfaces COM 105 enabling the device 100 to transmit and receive data.

The processor 101 is capable of executing instructions loaded into the RAM 102 from the ROM 103, from an external memory (such as an SD card), from a storage medium (such as the HDD), or from a communication network. When the device 100 is powered up, the processor 101 is capable of reading instructions from the RAM 102 and executing them. These instructions form a computer program causing the implementation, by the processor 101, of the method described in relation to Fig. 4. The methods described in relation to Figs. 4 may be implemented in software form by the execution of the set of instructions by a programmable machine, for example a DSP (acronym of "Digital Signal Processor"), a microcontroller or a GPU (acronym of "Graphics Processing Unit"), or be implemented in hardware form by a machine or a dedicated component (chip or chipset), for example an FPGA (acronym of "Field-Programmable Gate Array") or an ASIC (acronym of "Application-Specific Integrated Circuit"). In general, the device 100 includes electronic circuitry adapted and configured for implementing the methods described in relation to Fig. 4.

## Claims

1. A method for an uplink transmission delay estimation between a user equipment and a base station in a wireless communication network, the method being implemented in the base station and comprising:

   - receiving (S400) at least one random access preamble transmitted by the user equipment, said random access preamble comprising at least one cyclic prefix and Ns preamble sequences occupying M subcarriers, M being an integer, Ns being an integer equal or greater than one;
   - removing (S402) the at least one cyclic prefix to obtain the Ns preamble sequences;
   - applying (S404) a Fast Fourier transform of size N on each of the Ns obtained preamble sequences to obtain Ns sequences in the frequency domain, N being an integer;
   - multiplying (S406) each obtained sequence in the frequency domain with a complex conjugate of a corresponding transmitted preamble sequence to obtain , for each obtained sequence in the frequency domain identified by an index p, M values $Z_k^p$ where k is an index identifying the subcarrier;

   the method being **characterized in that** it further comprises:

   - computing (S408, S410, S412) the following sum for each value of s, where s is an integer lower than or equal to $s_{max}$ and corresponds to a subcarrier separation :

   $$S[s] = \frac{1}{N_s(M-s)} \sum_{p=1}^{Ns} \sum_{k=1}^{\bar{M}-s} Z_{k+s}^p \left(Z_k^p\right)^*$$

   - calculating (S414) C candidate values Γ[c], wherein C is an integer and Γ[c] is a weighted linear combination of Γ[c,s] with weighting factors increasing with s and $\Gamma[c,s] = \sqrt[s]{S[s]}\, e^{\frac{-j2\pi l[c,s]}{s}}$ or $\Gamma[c,s] = \sqrt[s]{S_{norm}[s]}\, e^{\frac{-j2\pi l[c,s]}{s}}$ where l[c,s] is a phase correcting factor and $S_{norm}[s]$ is a normalized version of S[s];
   - selecting (S416) a candidate $C_{opt}$ among the C candidate values Γ[c] with a smallest associated error calculated with respect to the sums S[s];
   - determining (S418) a phase responsive to the selected candidate; and
   - determining (S420) a delay responsive to the determined phase.

2. The method according to claim 1, wherein determining the delay responsive to the determined phase comprises calculating the delay $\hat{\tau}$ as follows:

   $$\hat{\tau} = \frac{N\varphi_{opt}}{2\pi}$$

   where $\varphi_{opt}$ is the determined phase.

3. The method according to claim 1 or 2, wherein determining the phase responsive to the selected candidate comprises

calculating the phase $\varphi_{opt}$ as follows:

$$\varphi_{opt} = -\arg\Gamma[c_{opt}]$$

where $C_{opt}$ is the selected candidate, arg(x) an operator returning the argument of x.

4. The method according to any one of claims 1 to 3, wherein selecting the candidate $C_{opt}$ among the C candidates with a smallest associated error calculated with respect to the sums S[s] is determined as follows:

$$C_{opt}=\underset{c}{\text{argmin}} \sum_s |S_{norm}[s] - \Gamma^s[c]|^2$$

where $S_{norm}[s]$ is a normalized version of S[s].

5. The method according to any one of claims 1 to 4, wherein the wireless communication network is a 5G network.

6. The method according to any one of claims 1 to 5, wherein each obtained sequence in the frequency domain is a Zadoff-Chu sequence or a M-sequence.

7. The method according to any one of claims 1 to 6, wherein Ns is equal to 1 or 2.

8. The method according to any one of claims 1 to 7, wherein M is equal to 839.

9. A time synchronization method between a user equipment and a base station comprising:

    - estimating, by the base station, a transmission delay according to claim 1;
    - transmitting, by the base station, the estimated transmission delay to the user equipment;
    - applying, by the user equipment, a time delay responsive to the received estimated transmission delay on all the uplink communications transmitted to the base station.

10. A device of the base station type in communication with a user equipment in a wireless communication network, the device being configured to estimate an uplink transmission delay estimation from the user equipment, the device comprising:

    - means for receiving at least one random access preamble transmitted by the user equipment, said random access preamble comprising at least one cyclic prefix and Ns preamble sequences occupying M subcarriers, M being an integer, Ns being an integer equal or greater than one;
    - means for removing the at least one cyclic prefix to obtain the Ns preamble sequences;
    - means for applying a Fast Fourier transform of size N on each of the Ns obtained preamble sequences to obtain Ns sequences in the frequency domain, N being an integer;
    - means for multiplying each obtained sequence in the frequency domain with a complex conjugate of a corresponding transmitted preamble sequence to obtain , for each obtained sequence in the frequency domain identified by an index p, M values $Z^p_k$ where k is an index identifying the subcarrier;

the method being **characterized in that** it further comprises:

    - means for computing the following sum for each value of s, where s is an integer lower than or equal to $s_{max}$ and corresponds to a subcarrier separation :

$$S[s] = \frac{1}{N_s(M-s)} \sum_{p=1}^{Ns} \sum_{k=1}^{M-s} Z^p_{k+s}\left(Z^p_k\right)^*$$

    - means for calculating C candidate values $\Gamma[c]$, wherein C is an integer and $\Gamma[c]$ is a weighted linear combination of $\Gamma[c,s]$ with weighting factors increasing with s and $\Gamma[c,s]=\sqrt[s]{S[s]}e^{\frac{-j2\pi l[c,s]}{s}}$ or

$$\Gamma[c,s]=\sqrt[s]{S_{norm}[s]}\, e^{\frac{-j2\pi l[c,s]}{s}}$$ where l[c,s] is a phase correcting factor and $S_{norm}[s]$ is a normalized version of S[s];

- means for selecting a candidate $C_{opt}$ among the C candidate values $\Gamma[c]$ with a smallest associated error calculated with respect to the sums S[s];
- means for determining a phase responsive to the selected candidate; and
- means for determining a delay responsive to the determined phase.

11. A computer program product comprising program code instructions that can be loaded in a programmable device, the program code instructions causing implementation of the method according to any one of claims 1 to 8 when the program code instructions are run by the programmable device.

12. A storage medium storing a computer program comprising program code instructions, the program code instructions causing implementation of the method according to any one of claims 1 to 8 when the program code instructions are read from the storage medium and run by the programmable device.

**Patentansprüche**

1. Verfahren zur Schätzung einer Aufwärtsstrecken-Übertragungsverzögerung zwischen einem Benutzergerät und einer Basisstation in einem drahtlosen Kommunikationsnetzwerk, wobei das Verfahren in der Basisstation implementiert ist und folgendes umfasst:

- Empfangen (S400) von wenigstens einer durch das Benutzergerät übertragenen Direktzugriffspräambel, wobei die Direktzugriffspräambel wenigstens ein zyklisches Präfix und Ns Präambelsequenzen, die M Hilfsträger besetzen, umfasst, wobei M eine ganze Zahl ist, wobei Ns eine ganze Zahl gleich oder größer als eins ist;
- Entfernen (S402) des wenigstens einen zyklischen Präfix, um die Ns Präambelsequenzen zu erhalten;
- Anwenden (S404) einer schnellen Fouriertransformation einer Größe N auf jede der Ns erhaltenen Präambelsequenzen, um Ns Sequenzen im Frequenzbereich zu erhalten, wobei N eine ganze Zahl ist;
- Multiplizieren (S406) jeder erhaltenen Sequenz im Frequenzbereich mit einer komplex konjugierten einer entsprechenden übertragenen Präambelsequenz, um für jede erhaltene Sequenz in dem durch einen Index p identifizierten Frequenzbereich M Werte $Z_k^p$ zu erhalten, wobei k ein den Hilfsträger identifizierenden Index ist;

wobei das Verfahren **dadurch gekennzeichnet ist, dass** es weiterhin folgendes umfasst:

- Berechnen (S408, S410, S412) der folgenden Summe für jeden Wert von s, wobei s ein ganze Zahl kleiner als oder gleich $s_{max}$ ist und einem Hilfsträgerabstand entspricht:

$$S[s] = \frac{1}{N_s(M-s)} \sum_{p=1}^{N_s} \sum_{k=1}^{M-s} Z_{k+s}^p \left(Z_k^p\right)^*$$

- Berechnen (S414) von C Kandidatenwerten $\Gamma(c)$, wobei C eine ganze Zahl ist und $\Gamma(c)$ eine gewichtete Linearkombination von $\Gamma(c, s)$ mit Gewichtungsfaktoren ist, die mit s größer werden, und

$$\Gamma[c,s] = \sqrt[s]{S[s]}\, e^{\frac{-j2\pi t[c,s]}{s}}$$ oder $$\Gamma[c,s] = \sqrt[s]{S_{norm}[s]}\, e^{\frac{-j2\pi t[c,s]}{s}}$$ , wobei $\Gamma[c,s]$ ein Phasenkorrekturfaktor ist und $S_{norm}[s]$ eine normalisierte Version von $S[s]$ ist,

- Auswählen (S416) eines Kandidaten $C_{opt}$ unter den C Kandidatenwerten $\Gamma[c]$ mit einem in Bezug auf die Summen S[s] berechneten kleinsten zugehörigen Fehler;
- Bestimmen (S418) einer Phase in Reaktion auf den ausgewählten Kandidaten; und
- Bestimmen (S420) einer Verzögerung in Reaktion auf die bestimmte Phase.

2. Verfahren nach Anspruch 1, wobei ein Bestimmen der Verzögerung in Reaktion auf die bestimmte Phase ein Berechnen der Verzögerung $\hat{\tau}$ wie folgt umfasst:

$$\hat{\tau} = \frac{N\varphi_{opt}}{2\pi},$$

wobei $\varphi_{opt}$ die bestimmte Phase ist.

3. Verfahren nach Anspruch 1 oder 2, wobei ein Bestimmen der Phase in Reaktion auf den ausgewählten Kandidaten ein Berechnen der Phase $\varphi_{opt}$ wie folgt umfasst:

$$\varphi_{opt} = -arg\Gamma\left[C_{opt}\right]$$

wobei $C_{opt}$ der ausgewählte Kandidat ist, arg(x) ein Operator, der das Argument von x zurückgibt.

4. Verfahren nach einem der Ansprüche 1 bis 3, wobei ein Auswählen des Kandidaten $C_{opt}$ unter den C Kandidaten mit einem in Bezug auf die Summen S[s] berechneten kleinsten zugehörigen Fehler wie folgt bestimmt wird:

$$C_{opt} = arg \min_{c} \sum_{s}|S_{norm}[s] - \Gamma^{s}[c]|^{2}$$ , wobei $S_{norm}[s]$ eine normalisierte Version von S[s] ist.

5. Verfahren nach einem der Ansprüche 1 bis 4, wobei das drahtlose Kommunikationsnetzwerk ein 5G-Netzwerk ist.

6. Verfahren nach einem der Ansprüche 1 bis 5, wobei jede erhaltene Sequenz im Frequenzbereich eine Zadoff-Chu-Sequenz oder eine M-Sequenz ist.

7. Verfahren nach einem der Ansprüche 1 bis 6, wobei Ns gleich 1 oder 2 ist.

8. Verfahren nach einem der Ansprüche 1 bis 7, wobei M gleich 839 ist.

9. Zeitsynchronisierungsverfahren zwischen einem Benutzergerät und einer Basisstation, umfassend:

- Schätzen, durch die Basisstation, einer Übertragungsverzögerung nach Anspruch 1;
- Übertragen, durch die Basisstation, der geschätzten Übertragungsverzögerung zum Benutzergerät;
- Anwenden, durch das Benutzergerät, einer Zeitverzögerung in Reaktion auf die empfangene geschätzte Übertragungsverzögerung auf alle zur Basisstation übertragene Aufwärtsstreckenkommunikationen.

10. Vorrichtung vom Basisstationstyp in Kommunikation mit einem Benutzergerät in einem drahtlosen Kommunikationsnetzwerk, wobei die Vorrichtung konfiguriert ist, um eine Aufwärtsstrecken-Übertragungsverzögerung vom Benutzergerät zu schätzen, wobei die Vorrichtung folgendes umfasst:

- Mittel zum Empfangen von wenigstens einer durch das Benutzergerät übertragenen Direktzugriffspräambel, wobei die Direktzugriffspräambel wenigstens ein zyklisches Präfix und Ns Präambelsequenzen, die M Hilfsträger besetzen, umfasst, wobei M eine ganze Zahl ist, wobei Ns eine ganze Zahl gleich oder größer als eins ist;
- Mittel zum Entfernen des wenigstens einen zyklischen Präfix, um die Ns Präambelsequenzen zu erhalten;
- Mittel zum Anwenden einer schnellen Fouriertransformation einer Größe N auf jede der Ns erhaltenen Präambelsequenzen, um Ns Sequenzen im Frequenzbereich zu erhalten, wobei N eine ganze Zahl ist;
- Mittel zum Multiplizieren jeder erhaltenen Sequenz im Frequenzbereich mit einer komplex konjugierten einer entsprechenden übertragenen Präambelsequenz, um für jede erhaltene Sequenz in dem durch einen Index p identifizierten Frequenzbereich M Werte $Z_{k}^{p}$ zu erhalten, wobei k ein den Hilfsträger identifizierender Index ist;

wobei die Vorrichtung **dadurch gekennzeichnet ist, dass** sie weiterhin folgendes umfasst:

- Mittel zum Berechnen der folgenden Summe für jeden Wert von s, wobei s ein ganze Zahl kleiner als oder gleich $s_{max}$ ist und einem Hilfsträgerabstand entspricht:

$$S[s] = \frac{1}{N_s(M-s)} \sum_{p=1}^{N_s} \sum_{k=1}^{M-s} Z_{k+s}^{p} \left(Z_k^{p}\right)^{*}$$

- Mittel zum Berechnen von C Kandidatenwerten $\Gamma(c)$, wobei C eine ganze Zahl ist und $\Gamma(c)$ eine gewichtete Linearkombination von $\Gamma(c, s)$ mit Gewichtungsfaktoren ist, die mit s größer werden, und

$$\Gamma[c,s] = \sqrt[s]{S[s]}e^{\frac{-j2\pi t[c,s]}{s}} \quad \text{oder} \quad \Gamma[c,s] = \sqrt[s]{S_{norm}[s]}e^{\frac{-j2\pi t[c,s]}{s}}$$, wobei $\Gamma[c,s]$ ein Phasenkorrekturfaktor ist und $S_{norm}[s]$ eine normalisierte Version von S[s] ist,

- Mittel zum Auswählen eines Kandidaten $C_{opt}$ unter den C Kandidatenwerten $\Gamma[c]$ mit einem in Bezug auf die Summen S[s] berechneten kleinsten zugehörigen Fehler;
- Mittel zum Bestimmen einer Phase in Reaktion auf den ausgewählten Kandidaten; und
- Mittel zum Bestimmen einer Verzögerung in Reaktion auf die bestimmte Phase.

11. Computerprogrammprodukt, das Programmcodeanweisungen umfasst, die in eine programmierbare Vorrichtung geladen werden können, wobei die Programmcodeanweisungen eine Implementierung des Verfahrens nach einem der Ansprüche 1 bis 8 veranlassen, wenn die Programmcodeanweisungen durch die programmierbare Vorrichtung ausgeführt werden.

12. Speichermedium, das ein Computerprogramm speichert, das Programmcodeanweisungen umfasst, wobei die Programmcodeanweisungen eine Implementierung des Verfahrens nach einem der Ansprüche 1 bis 8 veranlassen, wenn die Programmcodeanweisungen aus dem Speichermedium gelesen und durch die programmierbare Vorrichtung ausgeführt werden.

**Revendications**

1. Procédé d'estimation de retard de transmission en liaison montante entre un équipement utilisateur et une station de base dans un réseau de communication sans fil, le procédé étant mis en œuvre dans la station de base et comprenant:

- la réception (S400) d'au moins un préambule d'accès aléatoire transmis par l'équipement utilisateur, ledit préambule d'accès aléatoire comprenant au moins un préfixe cyclique et Ns séquences de préambule occupant M sous-porteuses, M étant un entier, Ns étant un entier égal ou supérieur à un;
- la suppression (S402) de l'au moins un préfixe cyclique pour obtenir les Ns séquences de préambule;
- l'application (S404) d'une transformée de Fourier rapide de taille N sur chacune des Ns séquences de préambule obtenues pour obtenir Ns séquences NS dans le domaine fréquentiel, N étant un entier;
- la multiplication (S406) de chaque séquence obtenue dans le domaine fréquentiel par un conjugué complexe d'une séquence de préambule transmise correspondante pour obtenir, pour chaque séquence obtenue dans le domaine fréquentiel identifiée par un indice p, M valeurs $Z_k^{p}$ où k est un indice identifiant la sous-porteuse;

le procédé étant **caractérisé en ce qu'**il comprend en outre:

- le calcul (S408, S410, S412) de la somme suivante pour chaque valeur de s, s étant un entier inférieur ou égal à $s_{max}$ et correspondant à une séparation de sous-porteuse:

$$S[s] = \frac{1}{N_s(M-s)} \sum_{p=1}^{N_s} \sum_{k=1}^{M-s} Z_{k+s}^{p} \left(Z_k^{p}\right)^{*}$$

- le calcul (S414) de C valeurs candidates $\Gamma[c]$, C étant un entier et $\Gamma[c]$ étant une combinaison linéaire pondérée de $\Gamma[c,s]$ avec des facteurs de pondération augmentant avec s et $\Gamma[c,s]=\sqrt[s]{S[s]}e^{\frac{-j2\pi t[c,s]}{s}}$ ou

$$\Gamma[c,s] = \sqrt[s]{S_{norm}[s]}\ e^{\frac{-j2\pi I[c,s]}{s}}$$

, I[c, s] étant un facteur de correction de phase et $S_{norm}[s]$ étant une version normalisée de S[s];

- la sélection (S416) parmi les C valeurs candidates Γ[c] d'un candidat $C_{opt}$ ayant la plus petite erreur associée calculée par rapport aux sommes S[s];
- la détermination (S418) d'une phase en réponse au candidat sélectionné; et
- la détermination (S420) d'un retard correspondant à la phase déterminée.

2. Procédé selon la revendication 1, dans lequel la détermination du retard en réponse à la phase déterminée comprend le calcul du retard $\hat{\tau}$ comme suit:

$$\hat{\tau} = \frac{N\varphi_{opt}}{2\pi}$$

où $\Gamma_{opt}$ est la phase déterminée.

3. Procédé selon la revendication 1 ou 2, dans lequel la détermination de la phase en réponse au candidat sélectionné comprend le calcul de la phase $\varphi_{opt}$ comme suit $\varphi_{opt} = -\arg \Gamma[c_{opt}]$ où $C_{opt}$ est le candidat sélectionné, arg(x) un opérateur renvoyant l'argument de x.

4. Procédé selon l'une quelconque des revendications 1 à 3, dans lequel la sélection parmi les C candidats du candidat $C_{opt}$ ayant la plus petite erreur associée calculée par rapport aux sommes S[s] est déterminée comme suit:

$$C_{opt} = \underset{c}{\arg\min} \sum_{s} |S_{norm}[s] - \Gamma^s[c]|^2$$

où $S_{norm}[s]$ est une version normalisée de S[s].

5. Procédé selon l'une quelconque des revendications 1 à 4, dans lequel le réseau de communication sans fil est un réseau 5G.

6. Procédé selon l'une quelconque des revendications 1 à 5, dans lequel chaque séquence obtenue dans le domaine fréquentiel est une séquence de Zadoff-Chu ou une séquence M.

7. Procédé selon l'une quelconque des revendications 1 à 6, dans lequel NS est égal à 1 ou 2.

8. Procédé selon l'une quelconque des revendications 1 à 7, dans lequel M est égal à 839.

9. Procédé de synchronisation temporelle entre un équipement utilisateur et une station de base comprenant

- l'estimation, par la station de base, d'un retard de transmission selon la revendication 1;
- la transmission, par la station de base, du retard de transmission estimé à l'équipement utilisateur;
- l'application, par l'équipement utilisateur, d'un retard en réponse au retard de transmission estimé reçu sur toutes les communications en liaison montante transmises à la station de base.

10. Dispositif du type station de base en communication avec un équipement utilisateur dans un réseau de communication sans fil, le dispositif étant configuré pour estimer une estimation de retard de transmission en la liaison montante à partir de l'équipement utilisateur, le dispositif comprenant:

- un moyen de réception d'au moins un préambule d'accès aléatoire transmis par l'équipement utilisateur, ledit préambule d'accès aléatoire comprenant au moins un préfixe cyclique et Ns séquences de préambule occupant M sous-porteuses, M étant un entier, NS étant un entier égal ou supérieur à un;
- un moyen de suppression de l'au moins un préfixe cyclique pour obtenir les Ns séquences de préambule;
- un moyen d'application d'une transformée de Fourier rapide de taille N sur chacune des Ns séquences de préambule obtenues pour obtenir Ns séquences NS dans le domaine fréquentiel, N étant un entier;
- un moyen de multiplication de chaque séquence obtenue dans le domaine fréquentiel par un conjugué complexe d'une séquence de préambule transmise correspondante pour obtenir, pour chaque séquence obtenue dans le domaine fréquentiel identifiée par un indice p, M valeurs $Z_k^p$ où k est un indice identifiant la sous-porteuse;

le procédé étant **caractérisé en ce qu**'il comprend en outre :

- un moyen de calcul de la somme suivante pour chaque valeur de s, s étant un entier inférieur ou égal à $s_{max}$ et correspondant à une séparation de sous-porteuse:

$$S[s] = \frac{1}{N_s(M-s)} \sum_{p=1}^{N_s} \sum_{k=1}^{M-s} Z_{k+s}^p (Z_k^p)^*$$

- un moyen de calcul de C valeurs candidates $\Gamma[c]$, C étant un entier et $\Gamma[c]$ étant une combinaison linéaire pondérée de $\Gamma[c,s]$ avec des facteurs de pondération augmentant avec s et $\Gamma[c,s] = \sqrt[s]{S[s]} e^{\frac{-j2\pi l[c,s]}{s}}$ ou $\Gamma[c,s] = \sqrt[s]{S_{norm}[s]} e^{\frac{-j2\pi l[c,s]}{s}}$, l[c,s] étant un facteur de correction de phase et $S_{norm}[s]$ étant une version normalisée de S[s] ;

- un moyen de sélection parmi les C valeurs candidates $\Gamma[c]$ d'un candidat $C_{opt}$ ayant la plus petite erreur associée calculée par rapport aux sommes S[s] ;
- un moyen de détermination d'une phase en réponse au candidat sélectionné ; et
- un moyen de détermination d'un retard correspondant à la phase déterminée.

11. Produit de programme d'ordinateur comprenant des instructions de code de programme pouvant être chargées dans un dispositif programmable, les instructions de code de programme, à leur exécution par le dispositif programmable, entraînant la mise en œuvre du procédé selon l'une quelconque des revendications 1 à 8.

12. Support de stockage stockant un programme d'ordinateur comprenant des instructions de code de programme, les instructions de code de programme, à leur lecture à partir du support de stockage et leur exécution par le dispositif programmable, entraînant la mise en œuvre du procédé selon l'une quelconque des revendications 1 à 8.

Fig. 1 – PRIOR ART

Fig. 2

Uplink/downlink transmission

Fig. 3

Start, s=1, $y(t)$ — S400

Remove CP(s) — S402

Applying a N-FFT on each preamble sequence — S404

Multiplying each obtained sequence by a complex conjugate — S406

$Z_k^p$

S412 — s++

Calculating sum S[s] — S408

YES

$s < s_{max}$ — S410

NO

Calculating C candidates and associated errors — S414

Selecting the candidate $C_{opt}$ with the smallest error — S416

Determining a phase $\varphi_{opt}$ from the selected candidate $C_{opt}$ — S418

Deriving a delay value $\hat{\tau}$ from the phase $\varphi_{opt}$ — S420

End — S422

Fig. 4

Start — S500

Determining β the least common multiple of all steps s — S502

r=0 — S504

Calculating l[s]=rs/β — S506

r++ — S510

r<β-1 ? — S508

YES

NO

Eliminating redundant sets — S512

End — S514

Fig. 5

101  102  104  100

PROC   MEM   PSRC

110

STCK   COM   RF

106   105   103

Fig. 6

**EP 3 937 442 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015144256 A1